# EUROPEAN PATENT SPECIFICATION

(11) **EP 2 186 656 B1**
(45) Date of publication and mention of the grant of the patent: **10.10.2012**
(21) Application number: 08776816.4
(22) Date of filing: 10.07.2008
(51) Int. Cl.: B60C 13/00, B60C 15/06

(54) **PNEUMATIC TIRE**
LUFTREIFEN
PNEU

(30) Priority: 04.09.2007 JP 2007228418
(43) Date of publication of application: 19.05.2010
(73) Proprietor: Sumitomo Rubber Industries, Ltd., Kobe-shi, Hyogo 651-0072 (JP)
(72) Inventor: NOTSU, Ryoji, Hyogo 651-0072 (JP)
(74) Representative: Manitz, Finsterwald & Partner GbR
(86) International application number: PCT/JP2008/001857
(87) International publication number: WO 2009/031261

(56) References cited:
- JP-A- 04 066 311
- JP-A- 2000 177 308
- JP-A- 2001 071 715
- JP-A- 2002 127 712
- JP-A- 2005 212 563
- JP-A- 2007 069 668

## Description

### [Technical Field]

The present invention relates to a pneumatic tire. More particularly, the present invention relates to a pneumatic tire to be attached to vehicles such as a passenger car and a motorcycle.

### [Background Art]

A pneumatic tire includes a bead. The bead has a core and an apex. The apex reinforces the bead. The apex enhances a durability of the bead. The apex increases a lateral stiffness of the tire. A tire having a great lateral stiffness is excellent in a handling stability. In general, the tire having the great lateral stiffness also has a great vertical stiffness. The tire having the great vertical stiffness has a poor ride comfort. Referring to a conventional pneumatic tire, a height and a hardness in an apex have been set in consideration of a balance of a handling stability and a ride comfort. There is a tendency that the height of the apex is increased with an increase in a power and an enhancement in a performance in a vehicle.

A tire including a rubber reinforcing layer has been disclosed in Japanese Laid-Open Patent Publication No. 11 - 20424 (USP 6053229). The rubber reinforcing layer is extended outward in a radial direction of the tire from an apex. The rubber reinforcing layer is positioned on an outer peripheral side of a carcass. In the tire, an increase in a height of the apex is suppressed by the rubber reinforcing layer. In the tire, a hardness of the rubber reinforcing layer and a position of an upper end thereof are adjusted so that a balance of a ride comfort and a handling stability is ensured. In the tire, the increase in the height of the apex is suppressed so that a productivity is inhibited from being reduced.
[Patent Document 1] Japanese Laid-Open Patent Publication No. 11-20424
A pneumatic tire having the features of the preamble of claim 1 is known from JP 2007-69668 A

### [Disclosure of the Invention]

### [Problems that the Invention is to Solve]

In the tire, there is a fear that the ride comfort might be remarkably reduced. In order to suppress the reduction in the ride comfort, the hardness of the rubber reinforcing layer is set to be equal to or smaller than 95. In a vehicle having an increase in a power and an enhancement in a performance, furthermore, it has been demanded to improve a handling stability. The hardness of the rubber reinforcing layer is increased so that the handling stability of the vehicle is enhanced. In a tire having an increase in the hardness of the rubber reinforcing layer, however, the ride comfort is reduced. In a vehicle having an increase in a power and an enhancement in a performance, there has been desired a tire which is excellent in the handling stability and the ride comfort.

It is an object of the present invention to provide a tire having both a ride comfort and a handling stability on a high level.

### [Means for Solving the Problems]

A pneumatic tire according to the present invention includes a tread having an external surface forming a tread surface, a pair of sidewalls extended almost inward in a radial direction from an end of the tread, a pair of beads positioned on almost an inside in the radial direction with respect to the sidewalls, a carcass laid between both of the beads along an inside of the tread, and a reinforcing layer positioned on an inner peripheral side of the carcass at an inside of the sidewalls. The carcass has a radial structure. The bead includes a core and an apex extended outward in the radial direction from the core. A ratio (Sa/Sc) of a sectional area Sa of the apex to a sectional area Sc of the core is equal to or higher than 0.5 and is equal to or lower than 1.5. A hardness of the reinforcing layer is equal to or higher than 85 and is equal to or lower than 95. A thickness of the reinforcing layer is equal to or greater than 1 mm and is equal to or smaller than 4 mm. A ratio (H1/Ht) of a height H1 of the reinforcing layer to a height Ht of the tire is equal to or higher than 0.5 and is equal to or lower than 0.8.

It is preferable that the thickness of the reinforcing layer in the tire should be equal to or greater than 2 mm. It is preferable that a distance in the radial direction from an end on an inside in the radial direction of the reinforcing layer to a bead toe tip should be equal to or greater than 10 mm.

### [Effect of the Invention]

The sectional area Sa of the apex in the tire is smaller than that of a conventional tire. The carcass of the tire is positioned on an outside of the reinforcing layer and is laid between both of the beads. In the tire, the reinforcing layer is positioned on the inner peripheral side of the carcass. Consequently, a length of the carcass is greater than that of the conventional tire. Although the reinforcing layer having the high hardness is provided in the tire, a ride comfort is not damaged. By the reinforcing layer having the high hardness, a longitudinal stiffness of the tire is great. The tire is excellent in a handling stability. In the tire, the ride comfort and the handling stability are compatible with each other on a high level.

### [Brief Description of the Drawings]

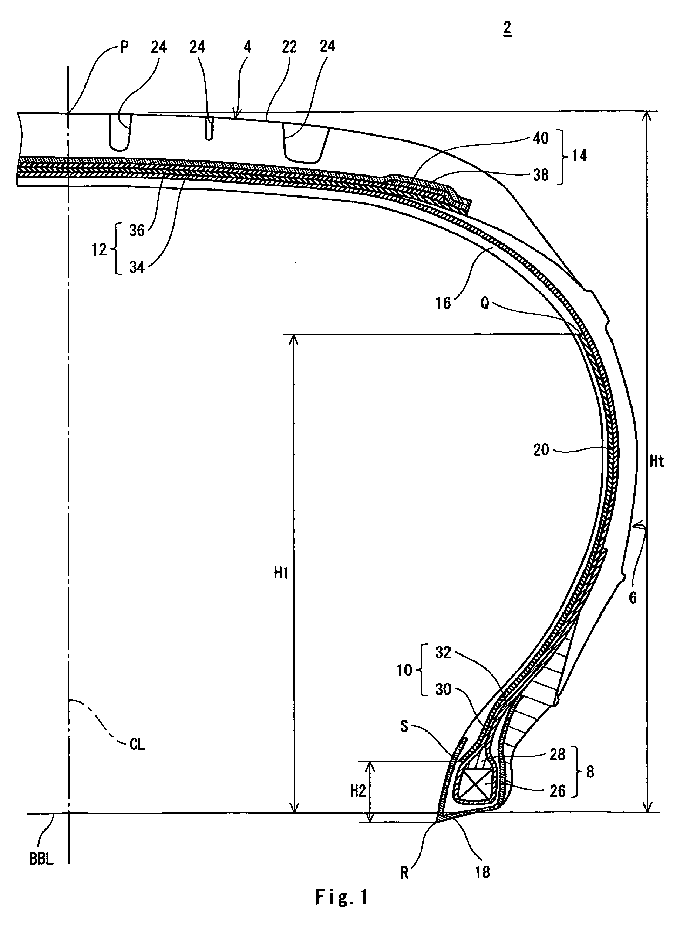

Fig. 1 is a sectional view showing a part of a pneumatic tire according to an embodiment of the present invention.

### [Explanation of Designations]

- 2: tire
- 4: tread
- 6: sidewall
- 8: bead
- 10: carcass
- 12: belt
- 14: band
- 16: inner liner
- 18: chafer
- 20: reinforcing layer
- 22: tread surface
- 24: groove
- 26: core
- 28: apex
- 30: body
- 32: fold-back portion
- 34: first belt ply
- 36: second belt ply
- 38: first band ply
- 40: second band ply

### [Best Mode for Carrying Out the Invention]

In Fig. 1, a vertical direction indicates a radial direction. A transverse direction indicates an axial direction. A perpendicular direction to a paper indicates a circumferential direction. A tire 2 takes an almost symmetrical shape with respect to a one-dotted chain line CL in Fig. 1. The one-dotted chain line CL represents an equator plane of the tire 2. A solid line BBL represents a bead base line. The tire 2 includes a tread 4, a sidewall 6, a bead 8, a carcass 10, a belt 12, a band 14, an inner liner 16, a chafer 18 and a reinforcing layer 20. The tire 2 is of a tubeless type. The tire 2 is attached to a passenger car.

The tread 4 is constituted by a crosslinked rubber which is excellent in an abrasion resistance. The tread 4 takes an outward convex shape in the radial direction. The tread 4 includes a tread surface 22. The tread surface 22 comes in contact with a road surface. A groove 24 is provided on the tread surface 22. By the groove 24, a tread pattern is formed. The groove 24 does not need to be formed on the tread 4.

The sidewall 6 is extended almost inward in the radial direction from an end of the tread 4. The sidewall 6 is constituted by a crosslinked rubber. The sidewall 6 absorbs a shock from the road surface by a flexure. Furthermore, the sidewall 6 prevents an external damage of the carcass 10.

The bead 8 is positioned on an almost inside in the radial direction with respect to the sidewall 6. The bead 8 includes a core 26 and an apex 28 extended outward in the radial direction from the core 26. The core 26 includes a plurality of non-extensible wires (typically, wires formed of steel). The apex 28 is tapered outward in the radial direction. In the tire 2, the apex 28 takes an almost triangular sectional shape. The apex 28 is constituted by a crosslinked rubber having a high hardness.

In Fig. 1, a ratio (Sa/Sc) of a sectional area Sa of the apex 28 to a sectional area Sc of the core 26 is equal to or higher than 0.5 and is equal to or lower than 1.5. Since the ratio (Sa/Sc) is equal to or higher than 0.5, air remains with difficulty between the core 26 and the carcass 10 in a manufacture. Since the ratio (Sa/Sc) is equal to or lower than 1.5, a lateral stiffness is maintained to be small. A vertical stiffness is also maintained to be small. The tire is excellent in a ride comfort. From this viewpoint, the ratio (Sa/Sc) is preferably equal to or lower than 1.0 and is further preferably equal to or lower than 0.8. The sectional areas Sc and Sa are measured in a sample obtained by cutting the tire 2 as in a section shown in Fig. 1.

The carcass 10 is laid between the beads 8 on both sides. The carcass 10 is provided along an inside of the tread 4 and the sidewall 6. The carcass 10 is folded back from an inside toward an outside in the axial direction around the core 26. The carcass 10 has a body 30 and a pair of fold-back portions 32 which are provided continuously from both ends of the body 30. The fold-back portion 32 is extended outward in the radial direction. The body 30 is superposed along an inside of the apex 28 and the core 26. The fold-back portion 32 is superposed along an outside of the apex 28 and the core 26. The body 30 and the fold-back portion 32 are superposed at an outward tip in the radial direction of the apex 28.

The carcass 10 is formed by a large number of cords which are provided in parallel and a topping rubber, which is not shown. An absolute value of an angle formed by the cord with respect to the equator plane is usually 70° to 90°. In other words, the carcass 10 has a radial structure. The cord is usually constituted by an organic fiber. Examples of a preferable organic fiber include a polyester fiber, a nylon fiber, a rayon fiber, a polyethylene naphthalate fiber and an aramid fiber.

The belt 12 is positioned on an outside in the radial direction of the carcass 10. The belt 12 is superposed on the carcass 10. The belt 12 reinforces the carcass 10. The belt 12 is formed by a first belt ply 34 and a second belt ply 36. The first belt ply 34 is formed by a large number of cords which are provided in parallel and a topping rubber, which is not shown. The cord is tilted with respect to the equator plane. An absolute value of a tilt angle is equal to or greater than 10° and is equal to or smaller than 35°. The second belt ply 36 is formed by a large number of cords which are provided in parallel and a topping rubber. The cord is tilted with respect to the equator plane. An absolute value of the tilt angle is equal to or greater than 10° and is equal to or smaller than 35°. A tilt direction of the cord of the first belt ply 34 is reverse to that of the cord of the second belt ply 36. A material of the cord is steel or an organic fiber. It is preferable that the material of the cord should be the steel.

The band 14 is positioned on an outer periphery of the belt 12. The band 14 is formed by a pair of first band plies 38 and a second band ply 40. The pair of first band plies 38 are positioned symmetrically with respect to the one-dotted chain line CL. The first band ply 38 is positioned on an end in the axial direction of the second belt ply 36. The first band ply 38 is formed by a cord and a topping rubber, which is not shown. The cord is extended substantially in the circumferential direction. The cord is wound spirally. The second band ply 40 is formed by a cord and a topping rubber. The cord is extended substantially in the circumferential direction. The cord is wound spirally. The band 14 has a so-called jointless structure. The belt 12 is restrained by the cord. Therefore, lifting of the belt 12 is suppressed. The cord is usually constituted by an organic fiber. Examples of a preferable organic fiber include a nylon fiber, a polyester fiber, a rayon fiber, a polyethylene naphthalate fiber and an aramid fiber.

The inner liner 16 is positioned on an inner peripheral surface of the carcass 10. The inner liner 16 is constituted by a crosslinked rubber. A rubber having an excellent air insulating property is used for the inner liner 16. The inner liner 16 plays a part in holding an internal pressure of the tire 2. The chafer 18 is positioned in the vicinity of the bead 8. When the tire 2 is incorporated into a rim, the chafer 18 abuts on the rim. By the abutment, the vicinity of the bead 8 is protected. The chafer 18 is usually constituted by a cloth and a rubber impregnated into the cloth. It is also possible to use the chafer 18 which is formed by a rubber unit.

The reinforcing layer 20 is positioned on an inside in the axial direction of the sidewall 6. The reinforcing layer 20 is positioned between the carcass 10 and the inner liner 16. The reinforcing layer 20 is constituted by a crosslinked rubber. A point Q indicates an outer end in the radial direction of the reinforcing layer 20. A point S indicates an inner end in the radial direction of the reinforcing layer 20. A double arrow Ht in Fig. 1 indicates a height of the tire. The height Ht of the tire represents a distance in the radial direction from the solid line BBL to the most distant point P of the tread surface 22 in the section of Fig. 1. A double arrow H1 in Fig. 1 indicates a height of the reinforcing layer 20. The height of the reinforcing layer 20 represents a distance in the radial direction from the solid line BBL to the point Q of the reinforcing layer 20. A point R in Fig. 1 indicates a bead toe tip. A double arrow H2 in Fig. 1 represents a distance in the radial direction from the point R to a point S of the reinforcing layer 20. Ht, H1 and H2 are measured in a sample obtained by cutting the tire 2 as in the section shown in Fig. 1.

The reinforcing layer 20 is provided so that the tire 2 can obtain a great longitudinal stiffness irrespective of a low ratio (Sa/Sc). The reinforcing layer 20 has a hardness which is equal to or higher than 85 and is equal to or lower than 95. By setting the hardness of the reinforcing layer 20 to be equal to or higher than 85, a great longitudinal stiffness can be obtained in the tire 2. By the great longitudinal stiffness, the tire 2 is excellent in a handling stability. By setting the hardness of the reinforcing layer 20 to be equal to or lower than 95, a lateral stiffness can be prevented from being increased in the tire 2. By preventing the lateral stiffness from being increased, it is possible to suppress an increase in a vertical stiffness. In the tire 2, a ride comfort is not damaged. For the hardness of the reinforcing layer 20, the JIS-A hardness is used. The hardness of the reinforcing layer 20 is measured by pressing a durometer of a type A against the reinforcing layer 20 at 23°C in accordance with rules of "JIS-K 6253".

A thickness of the reinforcing layer 20 is equal to or greater than 1 mm and is equal to or smaller than 4 mm. In the tire 2 in which the reinforcing layer 20 has a great thickness, the longitudinal stiffness is great. From this viewpoint, it is preferable that the thickness of the reinforcing layer 20 should be equal to or greater than 2 mm. In the tire 2 in which the reinforcing layer 20 has a small thickness, the lateral stiffness can be prevented from being increased. From this viewpoint, it is preferable that the thickness of the reinforcing layer 20 should be equal to or smaller than 3 mm. The thickness of the reinforcing layer 20 is measured in the sample obtained by cutting the tire 2 as in the section shown in Fig. 1.

A ratio (H1/Ht) of the height H1 of the reinforcing layer 20 to the height Ht of the tire 2 is equal to or higher than 0.5 and is equal to or lower than 0.8. The tire 2 having a high ratio (H1/Ht) has a great longitudinal stiffness. From this viewpoint, it is preferable that the ratio (H1/Ht) should be equal to or higher than 0.6. In the tire 2 having a low ratio (H1/Ht), it is possible to prevent the lateral stiffness from being increased. From this viewpoint, it is preferable that the ratio (H1/Ht) should be equal to or lower than 0.8.

The distance H2 in the radial direction of the reinforcing layer 20 from the point R on the bead toe tip of the tire 2 to the point S on the end of the reinforcing layer 20 is equal to or greater than 10 mm. Consequently, a rimming damage and a bead durable performance in the tire 2 are maintained on the same level as the conventional tire. From this viewpoint, it is more preferable that the distance H2 in the radial direction from the point R to the point S should be equal to or greater than 25 mm.

The point S on the end of the reinforcing layer 20 is positioned on an outside in the radial direction from an outside surface in the radial direction of the tire in the core 26. The position in the radial direction of the point S on the end of the reinforcing layer 20 is placed between an innermost position and an outermost position in the radial direction of the apex 28. The reinforcing layer 20 is superposed on one of sides of the body 30 in the carcass 10. The core 26 and the apex 28 are superposed on the other side of the body 30 in the carcass 10. By the structures of the reinforcing layer 20, the carcass 10, the core 26 and the apex 28, there is maintained a continuity in the radial direction of the tire in the reinforcing layer 20 and the apex 28. The structures contribute to the handling stability of the tire.

In the present invention, the dimension and the angle in each member of the tire are measured in a state in which the tire is incorporated in a normal rim and is filled with air to obtain a normal internal pressure if there is no particular description. During the measurement, a load is not applied to the tire. In this specification, the normal rim implies a rim determined in rules on which the tire depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure.

### [Examples]

Although the effect of the present invention will be apparent from examples, the present invention should not be construed to be restrictive based on the description of the examples.

### [Example 1]

There was obtained a radial tire for a passenger car which has the basic structure illustrated in Fig. 1 and a specification shown in Table 1. The tire has a size of 195/65R15. A ratio (Sa/Sc) is 0.75. An apex of the tire has a hardness of 80. A reinforcing layer of the tire has a hardness of 90. The reinforcing layer has a thickness of 2 mm. A ratio (H1/Ht) of a height of the reinforcing layer to a height of the tire is 0.8. For the hardness, the JIS-A hardness is used. The hardness of each of the apex and the reinforcing layer was measured by pressing a durometer of a type A at a room temperature.

### [Comparative Example 1]

A radial tire for a passenger car which has no reinforcing layer and is put on the market was prepared as a comparative example 1. The tire according to the comparative example 1 was the same as the tire according to the example 1 except that it has no reinforcing layer and is particularly shown in the Table 1.

### [Examples 2 to 4 and Comparative Examples 2 and 3]

A radial tire for a car according to each of examples 2 to 4 and comparative examples 2 and 3 was obtained in the same manner as in the example 1 except that it has the specification shown in the Table 1.

### [Examples 5 to 8 and Comparative Examples 4 and 5]

A radial tire for a car according to each of examples 5 to 8 and comparative examples 4 and 5 was obtained in the same manner as in the example 1 except that it has a specification shown in Table 2.

### [Comparative Examples 6 to 8]

A tire having the same structure as that of the radial tire according to the example 1 was prepared except that it includes a reinforcing layer which is positioned on an outer peripheral side of a carcass at an inside of a sidewall. There was obtained a radial tire for a car according to each of comparative examples 6 to 8 which has the specification shown in the Table 2.

### [Evaluation of Lateral Stiffness and Longitudinal Stiffness]

A lateral stiffness of a tire shown in each of the Tables 1 and 2 was measured. The lateral stiffness is measured by adding an excess of 70% of an allowable additional load. In the tire, the lateral stiffness was measured by adding a vertical load of 4.2 kN. The lateral stiffness was obtained from a ratio of a lateral force Fy to a lateral displacement Y in a relative movement over a flat road surface in a lateral direction. The lateral stiffness was measured by adding a lateral force of 0.49 kN to a tire having a rim size of 15 X 6J and an air pressure of 230 kPa. The ratio (Fy/Y) was measured in a plurality of measuring positions over a round of the tire and an average value thereof was obtained as the lateral stiffness.

A longitudinal stiffness of the tire used in an evaluation of the lateral stiffness was measured. The longitudinal stiffness was measured by adding the vertical load of 4.2 kN to the tire in the same manner as in the evaluation of the lateral stiffness. The longitudinal stiffness was obtained from a ratio of a longitudinal force Fx to a longitudinal displacement X in a relative movement over the flat road surface in a longitudinal direction. The longitudinal stiffness was measured at a relative speed of 1.3 mm/sec in the longitudinal direction. The ratio (Fx/X) was measured in a plurality of measuring positions over a round of the tire and an average value thereof was obtained as the longitudinal stiffness.

The Tables 1 and 2 show the lateral stiffness and the longitudinal stiffness in the tire according to each of the examples 1 to 8 and the comparative examples 2 to 8 in a state in which a lateral stiffness and a longitudinal stiffness in the tire according to the comparative example 1 are set to be 100. Greater numeric values represent a higher stiffness.

### [Running Evaluation]

A tire put on the market and a trial tire shown in the Tables 1 and 2 were sequentially attached to a car having a displacement of 2000 cc. A rim was set to take a size of 15 X 6J and an air pressure of the tire was set to be 230 kPa. The car was caused to run over a test course and a driver was caused to carry out a sensuous evaluation related to a handling stability and a ride comfort. It is indicated that the greater numeric value is more excellent. The result is shown in the Tables 1 and 2.

[Table 1]

**Table 1 Result of Evaluation**

| | | Compara. example 1 | Example 2 | Example 1 | Example 3 | Example 4 | Compara. example 2 | Compara. example 3 |
|---|---|---|---|---|---|---|---|---|
| Apex | (Sa/Sb) | 2.5 | 0.5 | 0.75 | 1.0 | 1.5 | 2.5 | 0.75 |
| | Hardness (JIS-A) | 92 | 80 | 80 | 80 | 80 | 80 | 80 |
| Reinforcing layer | Counter carcass position | None | Inside | Inside | Inside | Inside | Inside | Inside |
| | Hardness (JIS-A) | - | 90 | 90 | 90 | 90 | 90 | 80 |
| | Thickness (mm) | - | 2 | 2 | 2 | 2 | 2 | 2 |
| | (H1/H) | - | 0.8 | 0.8 | 0.8 | 0.8 | 0.8 | 0.5 |
| Lateral stiffness | | 100 | 95 | 96 | 97 | 99 | 102 | 90 |
| Longitudinal stiffness | | 100 | 103 | 105 | 104 | 104 | 106 | 98 |
| Handling stability | | 6 | 7 | 7 | 7 | 7 | 7 | 5 |
| Ride comfort | | 6 | 7 | 7 | 7 | 6 | 4 | 5 |

[Table 2]

**Table 2 Result of Evaluation**

| | | Example 5 | Example 6 | Example 7 | Compara. example 4 | Compara. example 5 | Example 8 | Compara. example 6 | Compara. example 7 | Compara. example 8 |
|---|---|---|---|---|---|---|---|---|---|---|
| Apex | (Sa/Sb) | 0.75 | 0.75 | 0.75 | 0.75 | 0.75 | 0.75 | 0.75 | 0.75 | 0.75 |
| | Hardness(JIS-A) | 80 | 80 | 80 | 80 | 80 | 80 | 80 | 80 | 80 |
| Reinforcing layer | Counter carcass position | Inside | Inside | Inside | Inside | Inside | Inside | Outside | Outside | Outside |
| | Hardness(JIS-A) | 90 | 90 | 90 | 90 | 90 | 90 | 80 | 90 | 90 |
| | Thickness(mm) | 1 | 3 | 4 | 5 | 2 | 2 | 2 | 2 | 2 |
| | (H1/H) | 0.8 | 0.8 | 0.8 | 0.8 | 0.4 | 0.5 | 0.5 | 0.5 | 0.8 |
| Lateral stiffness | | 94 | 96 | 99 | 102 | 93 | 93 | 95 | 98 | 101 |
| Longitudinal stiffness | | 102 | 105 | 106 | 107 | 102 | 102 | 95 | 98 | 100 |
| Handling stability | | 6 | 7 | 7 | 7 | 5 | 6 | 5 | 6 | 6 |
| Ride comfort | | 7 | 7 | 6 | 5 | 6 | 7 | 5 | 6 | 5 |

As shown in the Tables 1 and 2, the tire according to each of the examples has a higher evaluation for both the handling stability and the ride comfort as compared with the tire according to each of the comparative examples. From the result of the evaluation, the advantage of the present invention is apparent.

### [Industrial Applicability]

The present invention can be applied to tires of various vehicles.

## Claims

1. A pneumatic tire (2) comprising a tread (4) having an external surface forming a tread surface, a pair of sidewalls (6) extended almost inward in a radial direction from an end of the tread (4) a pair of beads (8) positioned on almost an inside in the radial direction with respect to the sidewalls (6), a carcass (10) laid between both of the beads (8) long an inside of the tread (4), and a reinforcing layer (20) positioned on an inner peripheral side of the carcass (10) at an inside of the sidewalls (6),
the carcass (10) having a radial structure,
the bead (8) including a core (26) and an apex (28) extended outward in the radial direction from the core (26) **characterised by** a ratio (Sa/Sc) of a sectional area Sa of the apex (28) to a sectional area Sc of the core (26) being equal to or higher than 0.5 and being equal to or lower than 1.5, and a ratio (H1/Ht) of a height H1 of the reinforcing layer (20) to a height Ht of the tire (2) being equal to or higher than 0.5 and being equal to or lower than 0.8 ,
a hardness of the reinforcing layer (20) being equal to or higher than 85 and being equal to or lower than 95,
a thickness of the reinforcing layer (20) being equal to or greater than 1 mm and being equal to or smaller than 4 mm (20).

2. The pneumatic tire according to claim 1, wherein the thickness of the reinforcing layer (20) is equal to or greater than 2 mm.

3. The pneumatic tire according to claim 1 or 2, wherein a distance in the radial direction from an end on an inside in the radial direction of the reinforcing layer (20) to a bead toe tip is equal to or greater than 10 mm.

## Patentansprüche

1. Luftreifen (2) mit einer Lauffläche (4), die eine Außenfläche aufweist, die eine Laufflächen-Oberfläche bildet, einem Paar Seitenwänden (6), die sich in einer radialen Richtung von einem Ende der Lauffläche (4) beinahe nach innen erstrecken, einem Paar Wülsten (8), die an beinahe einer Innenseite in der radialen Richtung mit Bezug auf die Seitenwände (6) angeordnet ist, einer Karkasse (10), die zwischen die beiden Wülste (8) entlang einer Innenseite der Lauffläche (4) gelegt ist, und einer Verstärkungsschicht (20), die an einer Innenumfangsseite der Karkasse (10) an einer Innenseite der Seitenwände (6) angeordnet ist,
wobei die Karkasse (10) einen radialen Aufbau aufweist,
der Wulst (8) einen Kern (26) und einen Kernreiter (28) umfasst, der sich von dem Kern (26) in der radialen Richtung nach au-βen erstreckt,
ein Verhältnis (Sa/Sc) einer Querschnittsfläche Sa des Kernreiters (28) zu einer Querschnittsfläche Sc des Kerns (26) gleich oder höher als 0,5 und gleich oder niedriger als 1,5 ist und
ein Verhältnis (H1/Ht) einer Höhe H 1 der Verstärkungsschicht (20) zu einer Höhe Ht des Reifens (2) gleich oder höher als 0,5 und gleich oder niedriger als 0,8 ist,
**dadurch gekennzeichnet, dass**
eine Härte der Verstärkungsschicht (20) gleich oder höher als 85 und gleich oder niedriger als 95 ist, und
eine Dicke der Verstärkungsschicht (20) gleich oder größer als 1 mm und gleich oder kleiner als 4 mm ist.

2. Luftreifen nach Anspruch 1,
wobei die Dicke der Verstärkungsschicht (20) gleich oder größer als 2 mm ist.

3. Luftreifen nach Anspruch 1 oder 2,
wobei ein Abstand in der radialen Richtung von einem Ende an einer Innenseite in der radialen Richtung der Verstärkungsschicht (20) zu einer Wulstzehenspitze gleich oder größer als 10 mm ist.

## Revendications

1. Bandage pneumatique (2) comprenant une bande de roulement (4) ayant une surface externe formant une surface de roulement, une paire de parois latérales (6) s'étendant pratiquement vers l'intérieur dans une direction radiale depuis une extrémité de la bande de roulement (4), une paire de talons (8) positionnés pratiquement à l'intérieur dans la direction radiale par rapport aux parois latérales (6), une carcasse (10) posée entre les deux talons (8) le long d'une face intérieure de la bande de roulement (4), et une couche de renforcement (20) positionnée sur un côté périphérique intérieur de la carcasse (10) à l'intérieur des parois latérales (6),
la carcasse (10) ayant une structure radiale,
les talons (8) incluant une âme (26) et un sommet (28) s'étendant vers l'extérieur dans la direction radiale depuis l'âme (26),
un rapport (Sa/Sc) d'une aire de section Sa du sommet (28) sur une aire de section (Sc) de l'âme (26) étant égal ou supérieur à 0,5 et étant égal ou inférieur à 1,5,
un rapport (H1/Ht) d'une hauteur Hl de la couche de renforcement (20) sur une hauteur Ht du pneumatique (2) étant égal ou supérieur à 0,5, et étant égal ou inférieur à 0,8,
**caractérisé par**
une dureté de la couche de renforcement (20) qui est égale ou supérieure à 85, et qui est égale ou inférieure à 95,
une épaisseur de la couche de renforcement (20) qui est égale ou supérieure à 1 mm, et qui est égale ou inférieure à 4 mm.

2. Bandage pneumatique selon la revendication 1, dans lequel l'épaisseur de la couche de renforcement (20) est égale ou supérieure à 2 mm.

3. Bandage pneumatique selon la revendication 1 ou 2, dans lequel une distance dans la direction radiale depuis une extrémité à l'intérieur dans la direction radiale de la couche de renforcement (20) jusqu'à une extrémité au pied du talon est égale ou supérieure à 10 mm.
